# EUROPÄISCHE PATENTANMELDUNG

(11) **EP 2 168 935 A1**
(43) Veröffentlichungstag der Anmeldung: **31.03.2010**
(21) Anmeldenummer: 08017129.1
(22) Anmeldetag: 29.09.2008
(51) Int. Cl.: C04B 35/106, C04B 35/66

(54) **Materialzusammensetzung zur Herstellung eines Feuerfestwerkstoffes sowie ihre Verwendung und Feuerfestformkörper sowie Verfahren zu seiner Herstellung**

(71) Anmelder: Siemens Aktiengesellschaft, 80333 München (DE)
(72) Erfinder: Aneziris, Christos, 09599 Freiberg (DE); Gerlach, Nora, 09599 Freiberg (DE); Grote, Holger, Dr., 45478 Mülheim (DE); Krusch, Claus, Dr., 45473 Mülheim an der Ruhr (DE)

(57) **Zusammenfassung**

Die Erfindung betrifft eine Materialzusammensetzung zur Herstellung eines Feuerfestwerkstoffes mit einem Feinkornanteil mit Korngrößen unter 100 µm und einen Grobkornanteil mit Korngrößen über 100 µm.

Der Feinkornanteil umfasst:
- Aluminiumoxid mit einem Gewichtsanteil von mindestens 90 % bezogen auf das Gesamtgewicht des Feinkornanteils und mit einer Korngröße von 50 nm bis 100 µm,
- Zirkonoxid mit einem Gewichtsanteil bis 5 % bezogen auf das Gesamtgewicht des Feinkornanteils und mit einer Korngröße zwischen 50 nm und 20 µm,
- einen Stabilisator für das Zirkonoxid sowie
- Titanoxidpulver mit einem Gewichtsanteil bis 5 % bezogen auf das Gesamtgewicht des Feinkornanteils und mit einer Korngröße zwischen 50 nm und 20 µm.

Der Grobkornanteil macht einen Gewichtsanteil von mehr als 30 % der Materialzusammensetzung aus und besteht aus Brechgranulat auf Aluminiumoxidbasis und/oder aus Hohlkugelstrukturen auf Aluminiumoxidbasis.

## Beschreibung

Die vorliegende Erfindung betrifft eine Materialzusammensetzung zur Herstellung eines Feuerfestwerkstoffes sowie eine Verwendung für die Materialzusammensetzung. Daneben betrifft sie einen Feuerfestformkörper für Hochtemperaturgasreaktoren, insbesondere ein Hitzeschildelement für eine Gasturbine, sowie ein Verfahren zum Herstellen des Feuerfestformkörpers.

Die Wände von heißgasführenden Hochtemperaturgasreaktoren, beispielsweise von Brennkammern in Gasturbinenanlagen, erfordern eine thermische Abschirmung ihrer tragenden Struktur gegen Heißgasangriff. Die thermische Abschirmung kann beispielsweise durch eine der eigentlichen Brennkammerwand vorgelagerte Heißgasauskleidung, bspw. in Form eines keramischen Hitzeschildes, realisiert werden. Eine derartige Heißgasauskleidung ist in der Regel aus einer Anzahl von metallischen oder keramischen Hitzeschildelementen aufgebaut, mit denen die Brennkammerwand flächig ausgekleidet ist. Keramische Materialien bieten sich für den Aufbau einer Heißgasauskleidung im Vergleich zu metallischen Werkstoffen aufgrund ihrer hohen Temperaturbeständigkeit, Korrosionsbeständigkeit und niedrigen Wärmeleitfähigkeit idealerweise an. Ein keramischer Hitzeschild ist bspw. in EP 0 558 540 B1 beschrieben.

Wegen materialtypischer Wärmedehnungseigenschaften und der im Rahmen des Betriebs typischerweise auftretenden Temperaturunterschiede - etwa zwischen der Umgebungstemperatur bei Stillstand der Gasturbinenanlage und der maximalen Temperatur bei Volllast - muss die Wärmebeweglichkeit insbesondere keramischer Hitzeschilde in Folge temperaturabhängiger Dehnung gewährleistet sein, damit keine den Hitzeschild zerstörenden Wärmespannungen durch Behinderung der temperaturabhängigen Dehnung auftreten. Zwischen den einzelnen Hitzeschildelementen sind daher Dehnspalte vorhanden, um die Wärmeausdehnung der Hitzeschildelemente zu ermöglichen. Aus Sicherheitsgründen sind die Dehnspalte so ausgelegt, dass sie auch bei maximaler Temperatur des Heißgases nie völlig geschlossen sind. Es ist daher sicherzustellen, dass das Heißgas nicht über die Dehnspalte zur tragenden Wandstruktur der Brennkammer gelangt. Um die Dehnspalte gegen den Eintritt von Heißgas zu sperren, werden diese häufig mit einem in Richtung des Brennkammerinneren strömenden Sperrluftstrom gespült. Als Sperrluft findet in der Regel Luft Verwendung, die gleichzeitig als Kühlluft zum Kühlen von die Hitzeschildelemente haltenden Haltelementen dient, was u.a. zum Auftreten von Temperaturgradienten im Bereich der Kanten eines Hitzeschildelementes führt. Infolge des Spülens der Dehnspalte mit Sperrluft werden die die Spalte begrenzenden Umfangsseiten ebenso wie die Kaltseite der Hitzeschildelemente gekühlt. Andererseits findet an der Heißseite der Hitzeschildelemente ein hoher Wärmeeintrag aufgrund des Heißgases statt. Es stellt sich daher innerhalb eines Hitzeschildelementes eine dreidimensionale Temperaturverteilung ein, die durch einen Temperaturabfall von der Heißseite zur Kaltseite sowie durch eine von zentralen Punkten des Hitzeschildelementes zu den Kanten hin auftretenden Temperaturabfall geprägt ist. Daher kommt es insbesondere bei keramischen Hitzeschildelementen auch ohne die Berührung benachbarter Hitzeschildelemente zu Spannungen auf der Heißseite, welche zu Rissbildungen führen und damit die Lebensdauer der Hitzeschildelemente negativ beeinflussen können.

Typischerweise sind die Hitzeschildelemente in einer Gasturbinenbrennkammer flach ausgebildet und parallel zur Tragstruktur angeordnet. Ein Temperaturgradient, der senkrecht zur Oberfläche der Tragstruktur verläuft, führt dabei nur zu vergleichsweise geringen thermischen Spannungen, solange für das keramische Hitzeschildelement im Einbauzustand eine Vorbeugung in Richtung auf das Innere der Brennkammer ohne Behinderung möglich ist.

Ein zur Tragstruktur parallel verlaufender Temperaturgradient wie derjenige, der von den Umfangsflächen des Hitzeschildelementes ausgehend zum Zentrum des Hitzeschildelementes verläuft, bringt infolge der Steifigkeit plattenähnlicher Geometrien bezüglich Verformungen parallel zu ihrer größten Projektionsfläche rasch erhöhte Thermospannungen mit sich. Diese führen dazu, dass die kalten Kanten der Umfangsflächen infolge ihrer vergleichsweise geringen thermischen Dehnung von heißeren Zentralbereichen, die einer größeren thermischen Dehnung unterworfen sind, unter Zug gesetzt werden. Dieser Zug kann bei Überschreiten der Materialfestigkeit zur Bildung von Rissen führen, die von den Kanten des Hitzeschildelementes ausgehen und in Richtung auf zentrale Bereiche des Hitzeschildelementes verlaufen.

Die Risse vermindern den tragenden Querschnitt des Hitzeschildelementes. Je länger die Risse sind, desto kleiner ist der tragende Restquerschnitt des Hitzeschildelementes. Die thermisch bedingten Risse können sich durch im Betrieb der Gasturbinenanlage auftretende mechanische Belastungen verlängern, was zu einer weiteren Reduzierung des Restquerschnittes führt und den Austausch des Hitzeschildelementes nötig machen kann. Derartige mechanische Belastungen treten beispielsweise bei oszillierenden Beschleunigungen der Brennkammerwand auf, die durch Verbrennungsschwingungen, also Schwingungen in den Verbrennungsabgasen, verursacht werden können.

Um den Bedarf an Sperrluft - und damit thermisch bedingte Spannungen in Hitzeschildelementen - zu verringern, wurde in EP 1 302 723 A1 vorgeschlagen, Strömungsbarrieren in den Dehnspalten anzuordnen. Dies kann auch zu einer Verringerung des Temperaturgradienten im Bereich der Kanten führen. Das Einbringen von Strömungsbarrieren ist jedoch nicht immer ohne weiteres möglich und erhöht zudem die Komplexität eines Hitzeschildes.

Weiterhin sind Hitzeschildelemente starken korrosiven Belastungen ausgesetzt, welche zu einem die Lebensdauer limitierenden Materialverlust führen. Der bei den keramischen Hitzschildelementen auftretende Materialverlust ist auf eine Kombination aus Korrosion, anschließendem Nachsintern der Oberfläche und erosiver Belastung durch den hohen Massedurchsatz an Heißgas zurückzuführen. Der Materialabtrag ist in der Regel dort am größten, wo die höchsten Strömungsgeschwindigkeiten des Heizgases herrscht. Bei den heutzutage häufig verwendeten keramischen Hitzeschildern aus Korund und Mullit mit Glasphase ist der Materialverlust im Wesentlichen auf zwei Reaktionen zurückzuführen, nämlich erstens Mullitabbau sowie zweitens Kornwachstum und Nachsinterung. Der im Heißgas vorhandene Wasserdampf führt zum Abbau von Mullit (3Al₂O₃ * 2SiO₂) oder 2Al₂O₃ * 1SiO₂) und Glasphase zu Korund (Al₂O₃) und Siliziumoxid (SiOₓ). Der an der Oberfläche eines Hitzeschildelementes dann vorliegende Korund, sowohl in der Matrix des Hitzeschildelementes, als auch in der Korrosionsschicht der Mullitkörner, zeigt Kornwachstum und Versinterung. Kornwachstum und Versinterung nehmen mit der Betriebdauer zu. Dies führt mit zunehmenden Startzahlen einer Gasturbine zu einer Schwächung der Oberfläche durch Mikrorissbildung. In der Folge werden durch den hohen Massedurchsatz Oberflächenpartikel mitgerissen, was zur Erosion führt. Im Ergebnis wird die Lebensdauer der Hitzeschildelemente durch die Korrosion begrenzt, was einen frühzeitigen Austausch nötig macht. Hinzu kommt, dass im Falle eines Schwerölbetriebs einer Gasturbine Magnesium als Inhibitor zugeführt wird, was ebenfalls zu einem korrosiven Abtrag der Hitzeschildelemente führt. Ursache hierfür ist eine Reaktion des Korunds im Hitzeschildelement mit dem Magnesium im Inhibitor zu Spinell als Reaktionsprodukt. Auch dies führt zu einer Lebensdauerverkürzung und zur Notwendigkeit eines frühzeitigen Austausches des Hitzeschildelementes.

In der DE 10 2005 036 394 A1 wird ein Werkstoff beschrieben, in dem einem zirkondioxidfreien Feuerfestoxidpulver mit einem Gewichtsanteil von mindestens 90 % und einer Korngröße zwischen 1 und 150 µm ein mit Magnesiumoxid teil- oder vollstabilisiertes Zirkondioxidpulver mit einem Gewichtsanteil von bis zu 5 % und einer Korngröße zwischen 1 und 20 µm sowie ein Titandioxidpulver mit einem Gewichtsanteil bis zu 5 % und einer Korngröße zwischen 50 nm und 20 µm zugegeben werden. Diesem Gemisch kann außerdem feuerfestes Oxidpulver mit einem Gewichtsanteil bis zu 5 % und einer Korngröße zwischen 1 µm und 20 µm zugegeben werden. Das weitere feuerfeste Oxidpulver ist hierbei vorzugsweise Aluminiumoxid und/oder Magnesiumoxid und/oder Yttriumoxid und/oder Ceroxid. Bei einer Sinterung oberhalb 1.550°C oder während der Anwendung des Keramikwerkstoffes bildet der Magnesiumoxidstabilisator des Zirkondioxids Spinellphasen und/oder Magnesiumaluminat, und das Zirkondioxid wird destabilisiert. Alternativ oder zusätzlich kann Zirkoniumtitanat und/oder Aluminiumtitanat gebildet werden, die in Summe zu unterkritischen Rissentstehungen in der Keramikmatrix führen und die Thermoschockbeständigkeit verbessern. Aus der genannten Materialzusammensetzung können überwiegend nur dünnwandige kleinvolumige Hohlbauteile erzeugt werden, da die Sinterung mit einer Schwindung > 10 Vol.-% behaftet ist.

In CH 469 641 ist ein Verfahren zum Herstellen eines spinellhaltigen Formteils beschrieben. Einem tonerde- und kalkhaltigen Silikatglaspulver wird Magnesiumoxid zugesetzt. Das Gemisch wird geformt und danach erhitzt und gesintert, wobei die Komponenten der Mischung durch längeres Verweilen bei der Sintertemperatur des Glases in Reaktion und hierbei zum Entglasen gebracht werden. Die chemischen, aber insbesondere die thermomechanischen Eigenschaften eines solchen Formteils oberhalb 1.550°C entsprechen aber nicht den Anforderungen, wie sie beispielsweise heutzutage in Gasturbinen gestellt werden.

DE 26 24 299 A1 beschreibt Verschleißteile für Metallschmelze enthaltende Behälter. Die Verschleißteile werden unter Verwendung eines hydraulisch abbindenden hochtonerdhaltigen feuerfesten Feuerbetons hergestellt. Der Feuerbeton kann einen spinellbildenden Zusatzstoff enthalten.

DE 24 59 601 B1 beschreibt eine feuerfeste keramische Masse, die Kohlenstoff und Silizium enthält und der Spinell bildende Oxide zugegeben sein können.

EP 1 571 393 A1 beschreibt ein feuerfestes Material, das im Wesentlichen aus Magnesiumoxid und einer beträchtlichen Menge eines magnesiumhaltigen Spinell-Bildners besteht. Die handahbung und Formgebung solcher Werkstoffe ist aber aufgrund der Hydration des Magnesiumoxids zu Magnesiumhydroxid als kritisch einzustufen.

In EP 1 820 586 A1 ist ein keramischer Lochstein zum Einsatz in oder an einem metallurgischen Gefäß zur Aufnahme von Metallschmelzen beschrieben. Dieser ist ganz oder teilweise aus keramischen Fasern, Hohlkugeln oder Schaumkeramik gebildet. Weiterhin ist ein keramischer Lochstein beschrieben, der ganz oder teilweise aus mindestens 95 % reinem Material der Gruppe Aluminiumoxid, Zirkondioxid, vorzugsweise stabilisiertes Zirkondioxid, Magnesiumoxid, Kalziumoxid, Spinell gebildet ist.

In EP 0 535 233 B1 ist ein monolitisches feuerfestes Material des Alumiuniumoxid-Spinell-Typs beschrieben.

In WO 2005/031046 A1 sind Spinellerzeugnisse unter Zugabe von Bindemitteln beschrieben.

In WO 01/60761 A1 ist ein ringförmiger Einsatz für Schieberplatten beschrieben, der Kohlenstoff und mindestens einen Stoff aus der Gruppe MgO-Sinter, MgO-Spinell, MgO-Kauster enthält.

Alternative Vorgehensweisen zur Verwendung von keramischen Hitzeschildelementen bestehen darin, Hitzeschildelemente aus Metall zu verwenden. Metallische Hitzeschildelemente weisen zwar gegenüber Temperaturschwankungen und mechanischen Belastungen eine höhere Widerstandsfähigkeit als keramische Hitzeschildelemente auf, erfordern jedoch bspw. in Gasturbinenberennkammern eine aufwändige Kühlung des Hitzeschildes, da sie eine höhere Wärmeleitfähigkeit als keramische Hitzeschildelemente besitzen. Außerdem sind metallische Hitzeschildelemente korrosionsanfälliger und können aufgrund ihrer geringeren Temperaturstabilität nicht so hohen Temperaturen ausgesetzt werden wie keramische Hitzeschildelemente.

Gegenüber diesem Stand der Technik ist es eine erste Aufgabe der vorliegenden Erfindung, eine vorteilhafte Materialzusammensetzung zur Herstellung eines thermoschock- und korrosionsbeständigen Feuerfestwerkstoffes auf Aluminiumoxidbasis sowie eine Verwendung für das Material zur Verfügung zu stellen. Es ist eine zweite Aufgabe der vorliebenden Erfindung, ein vorteilhaftes Verfahren zum Herstellen eines Feuerfestformkörpers, insbesondere eines Hitzeschildelementes für Hochtemperaturgasreaktoren, zur Verfügung zu stellen. Eine dritte Aufgabe der vorliegenden Erfindung ist es, einen vorteilhaften Feuerfestformkörper auf der Basis eines thermoschock- und korrosionsbeständigen Aluminiumoxidwerkstoffes zur Verfügung zu stellen.

Die erste Aufgabe wird durch eine Materialzusammensetzung nach Anspruch 1 bzw. eine Verwendung nach Anspruch 16 gelöst, die zweite Aufgabe durch ein Verfahren nach Anspruch 9 zum Herstellen eines Feuerfestkörpers und die dritte Aufgabe durch einen Feuerfestformkörper nach Anspruch 14. Die abhängigen Ansprüche enthalten vorteilhafte Ausgestaltungen der Erfindung.

Eine erfindungsgemäße Materialzusammensetzung zur Herstellung eines Feuerfestwerkstoffes weist einen Feinkornanteil mit Korngrößen unter 100 µm, vorzugsweise unter 10 µm, insbesondere im Bereich von 0,01 µm bis 10 µm, und einen Grobkornanteil mit Korngrößen über 100 µm, insbesondere von 100 µm bis 6 mm, auf.

Der Feinkornanteil der erfindungsgemäßen Materialzusammensetzung umfasst Aluminiumoxid (Al₂O₃) mit einem Gewichtsanteil von mindestens 90 % bezogen auf das Gesamtgewicht des Feinkornanteils und mit einer Korngröße von 50 nm bis 100 µm, Zirkonoxid (ZrO₂) mit einem Gewichtsanteil bis 5 % bezogen auf das Gesamtgewicht des Feinkornanteils und mit einer Korngröße zwischen 50 nm und 20 µm, einen Stabilisator für das Zirkonoxid sowie Titanoxid (TiO₂) mit einem Gewichtsanteil bis 5 % bezogen auf das Gesamtgewicht des Feinkornanteils und mit einer Korngröße zwischen 50 nm und 20 µm. Insbesondere kann das Zirkonoxid des Feinkornanteils mit dem Stabilisator bereits teil- oder vollstabilisiert sein. Alternativ ist es aber auch möglich, dass als Zirkonoxid im Feinkornanteil monoklines Zirkonoxid (Baddeleyit) Verwendung findet und der Stabilisator als eigenständiger Bestandteil des Feinkornanteils vorliegt. Geeignete Stabilisatoren für das Zirkonoxid sind beispielsweise Magnesiumoxid (MgO) und/oder Yttriumoxid (Y₂O₃) und/oder Ceroxid (CeO) und/oder Kalziumoxid (CaO).

Der Grobkornanteil der erfindungsgemäßen Materialzusammensetzung macht einen Gewichtsanteil von mehr als 30 %, insbesondere einen Gewichtsanteil von 60 % bis 80 %, bezogen auf das Gesamtgewicht der Materialzusammensetzung aus und umfasst im Wesentlichen Brechgranulat auf Aluminiumoxidbasis und/oder Hohlkugelstrukturen auf Aluminiumoxidbasis oder besteht aus solchem Brechgranulat und/oder solchen Hohlkugelstrukturen. Er kann insbesondere dieselbe Zusammensetzung wie der Feinkornanteil besitzen beispielsweise wenigstens zum Teil auf der Basis des Feinkornanteils als aus einer Schmelze erstarrtes oder als vorsynthetisiertes gesintertes Brechgranulat hergestellt sein, wobei das gesinterte Brechgranulat bei Temperaturen oberhalb von 1.300°C, vorzugsweise oberhalb 1.550°C, gesintert worden ist. Der Grobkornanteil kann zudem zusätzlich zu dem Brechgranulat und/oder den Hohlkugelstrukturen weitere Oxide, bspw. Al₂O₃, ZrO₂, TiO₂, etc, umfassen.

Der in der erfindungsgemäßen Materialzusammensetzung vorhandene Grobkornanteil ermöglicht insbesondere das Herstellen großvolumiger Voll- und Hohlbauteile auf der Basis eines thermoschock- und korrosionsbeständigen Aluminiumwerkstoffes. Aus einem feinkörnigen Schlicker, wie er beispielsweise in der eingangs erwähnten DE 10 2005 036 394 A1 beschrieben ist, können dagegen überwiegend nur dünnwandige kleinvolumige Hohlbauteile erzeugt werden, da die Sinterung mit einer Schwindung > 10 % behaftet ist. Weiterhin bestehen bei der erfindungsgemäßen Materialzusammensetzung die eingangs mit Bezug auf den Stand der Technik beschriebenen Schwierigkeiten, die durch die Zugabe von Zement- oder Phosphat- oder Aluminiumhydroxid-Bindemitteln herrühren, nicht, so dass erfindungsgemäß ein bindemittelfreier, thermoschockbeständiger Werkstoff zur Verfügung gestellt wird.

Die Materialzusammensetzung kann insbesondere auch bereits mit einem Dispergiermedium und/oder einem Verflüssiger, beispielsweise Wasser, aufbereitet sein.

Im erfindungsgemäßen Verfahren zum Herstellen eines Feuerfestkörpers, insbesondere eines Hitzeschildelementes beispielsweise für Hochtemperaturgasreaktoren wie etwa Gasturbinenbrennkammern, findet eine erfindungsgemäße Materialzusammensetzung Verwendung. Der Materialzusammensetzung wird ein Dispergiermittel und/oder ein Verflüssiger, beispielsweise Wasser, zugegeben, sofern sie noch kein Dispergiermittel und/oder Verflüssiger enthält. Anschließend wird die Materialzusammensetzung zu einem Formkörper geformt und der Formkörper bei einer Temperatur oberhalb 1.300°C gesintert. Erst nach der Sinterung entsteht der thermoschockbeständige Verbundwerkstoff des Feuerfestformkörpers. Bei der Sinterung oder während der Anwendung des Keramikwerkstoffes wird dem Zirkonoxid im Feinkornanteil der Stabilisator entzogen, und es entstehen mit dem Matrixwerkstoff Spinellphasen und/oder Titanatphasen des Stabilisators. Weiterhin können Zirkoniumtitanat und/oder Aluminiumtitanat gebildet werden. Die Destabilisierung des Zirkonoxids und die Bildung der neuen Phasen führen in der Summe zur Entstehung von unterkritischen Rissen in der Keramikmatrix, die die Thermoschockbeständigkeit des hergestellten Feuerfestformkörpers erheblich verbessern.

Wenn die Materialzusammensetzung noch kein Dispergiermittel und/oder keinen Verflüssiger enthält, erfolgt das Zugeben des Dispergiermittels und/oder des Verflüssigers zu der Materialzusammensetzung, indem zuerst ein Gemisch aus Dispergiermittel und/oder Verflüssiger und dem Feinkornanteil aufbereitet wird und dem Gemisch anschließend der Grobkornanteil zugegeben wird. Mit anderen Worten, es wird zuerst eine Dispersion des Feinkornanteils hergestellt, der anschließend der Grobkornanteil beigemischt wird.

Insbesondere kann wenigstens ein Teil des Grobkornanteils aus einer Materialzusammensetzung gemäß Feinkornanteil erzeugt werden, indem diese gesintert oder aus einer Schmelze erstarren gelassen und anschließend heruntergebrochen wird.

Zur Formgebung kann die Materialzusammensetzung mit dem Dispergiermittel und/oder vom Verflüssiger in eine vorzugsweise poröse Form, beispielsweise eine Gipsform, gegeben werden.

Neben dem Dispergiermittel und/oder dem Verflüssiger kann der Materialzusammensetzung vor dem Formen wenigstens ein weiterer Hilfsstoff auf anorganischer oder organischer Basis, beispielsweise kalzinierter Spinell als sinterfördernde Hilfsphase, beigemischt werden.

Im Übrigen ermöglicht es das erfindungsgemäße Verfahren, die mit Bezug auf die erfindungsgemäße Materialzusammensetzung beschriebenen Vorteile in einem Feuerfestformkörper zu realisieren.

Ein erfindungsgemäßer Feuerfestformkörper, der bspw. als Feuerfestformkörper für Hochtemperaturgasreaktoren, als Tauchausguss, als Schieberplatte, als Auslaufdüse für die Metallurgie, etc ausgebildet sein kann, ist aus einer erfindungsgemäßen Materialzusammensetzung hergestellt und weist die auf der Basis der erfindungsgemäßen Materialzusammensetzung erzielbaren Vorteile auf. Er kann insbesondere ein Hitzeschildelement für Gasturbinenbrennkammern sein. Mit erfindungsgemäßen Feuerfestformkörpern lässt sich so eine Heißgasauskleidung mit im Vergleich zum Stand der Technik höherer Lebensdauer herstellen.

Erfindungsgemäß kann die Materialzusammensetzung außer zum Herstellen von Feuerfestformkörpern auch als feuerfestes Auskleidungsmaterial, bspw. in einer Pfanne oder in einem Verteiler für die Metallurgie, Verwendung finden.

Weitere Merkmale, Eigenschaften und Vorteile der vorliegenden Erfindung ergeben sich aus der nachfolgenden Beschreibung von Ausführungsbeispielen unter Bezugnahme auf die beiliegenden Figuren.

Fig. 1 zeigt einen erfindungsgemäßen Feuerfestformkörper in einer schematischen Darstellung.

Fig. 2 zeigt ein Ablaufdiagramm für das erfindungsgemäße Verfahren zum Herstellen eines Feuerfestformkörpers.

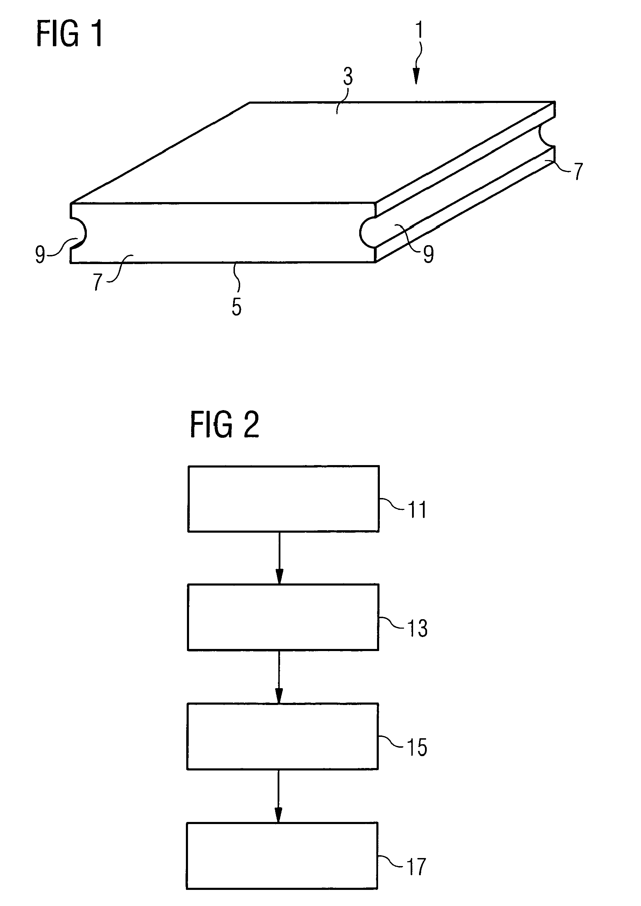

Fig. 1 zeigt in einer schematisierten Darstellung ein Hitzeschildelement für eine Gasturbinenbrennkammer als ein Ausführungsbeispiel für einen erfindungsgemäßen Feuerfestformkörper. Das in Fig. 1 dargestellte Hitzeschildelement 1 weist eine Heißseite 3, die dem Brennkammerinneren zuzuwenden ist, eine Kaltseite 5, die der Tragstruktur der Brennkammer zuzuwenden ist, und vier Umfangsseiten 7 auf. In zwei der Umfangsseiten 7 sind Nuten 9 vorhanden, die den Eingriff einer das Hitzeschildelement 1 an der Tragstruktur haltenden Halteklammer ermöglichen. Selbstverständlich können auch andere Haltemöglichkeiten zur Anwendung kommen, bei denen die Nuten 9 nicht notwendig sind. Beispielsweise kann die Kaltseite 5 des Hitzeschildelementes 1 mit der Tragstruktur verschraubt werden.

Ein Verfahren zum Herstellen des in Fig. 1 dargestellten Hitzeschildelementes unter Verwendung einer erfindungsgemäßen Materialzusammensetzung wird nachfolgend anhand von Fig. 2, die ein schematisches Ablaufdiagramm des Verfahrens darstellt, beschrieben.

Ausgangspunkt für das in Fig. 2 dargestellte Verfahren ist eine erfindungsgemäße Materialzusammensetzung mit einem Großkornanteil und einem Feinkornanteil. Im vorliegenden Ausführungsbeispiel weist der Feinkornanteil Korngrößen im Bereich zwischen 0,1 µm und 10 µm auf. Er kann grundsätzlich aber auch Korngrößen bis 100 µm aufweisen. Der Grobkornanteil weist Korngrößen im Bereich von 100 µm bis 6 mm auf.

Der Feinkornanteil des vorliegenden Ausführungsbeispiels besteht im Wesentlichen aus drei Oxiden, nämlich Aluminiumoxid (Al₂O₃), Zirkondioxid (ZrO₂) und Titandioxid (TiO₂), wobei das Aluminiumoxid im vorliegenden Ausführungsbeispiel einen Gewichtsanteil von 95 % am Feinkornanteil ausmacht. Die beiden übrigen Oxide machen jeweils einen Gewichtsanteil von 2,5 % am Feinkornanteil aus. Im vorliegenden Ausführungsbeispiel ist das Zirkondioxid in seiner Kristallstruktur mit Magnesiumoxid (MgO) teilstabilisiert. Statt auf der Basis von Magnesiumoxid kann die Teilstabilisierung zusätzlich oder alternativ auf der Basis von Yttriumoxid (Y₂O₃), Cerdioxid (CeO₂) oder Kalziumoxid (CaO) herbeigeführt sein. Es wird darauf hingewiesen, dass nicht notwendigerweise bereits voll- oder teilstabilisiertes Zirkondioxid Verwendung finden muss. Stattdessen ist es auch möglich, monoklines Zirkondioxid zu verwenden und das Stabilisatormaterial als eigenständige Komponente des Feinkornanteils vorzusehen. Unabhängig davon, ob der Stabilisator als eigenständige Komponente zugegeben ist oder das Zirkondioxid mit dem Stabilisator bereits voll- oder teilstabilisiert ist, beträgt der Gewichtsanteil des Stabilisators am Feinkornanteil zwischen 0,01 und 0,1 %.

Im Rahmen des Ausführungsbeispiels ist es insbesondere möglich, den Grobkornanteil aus dem Feinkornanteil herzustellen. Hierzu kann eine Zusammensetzung gemäß dem Feinkornanteil geschmolzen werden. Nach dem Erstarren der Schmelze wird diese dann zum Grobkornanteil heruntergebrochen. Alternativ ist es auch möglich, den Grobkornanteil aus einer dem Feinkornanteil entsprechenden Mischung herzustellen, in dem diese gesintert wird und der entstehende Sinterkörper zum Grobkornanteil heruntergebrochen wird. Der mittels des Schmelzprozesses oder des Sinterprozesses hergestellte Grobkornanteil wird im Weiteren als vorsynthetisierter Grobkornanteil bezeichnet. Da der Grobkornanteil dann, wenn er aus Feinkornanteil hergestellt worden ist, dieselbe Zusammensetzung in Gewichtsanteilen wie der Feinkornanteil besitzt, entsprechen diese Gewichtsanteile dann auch den Gewichtsanteilen an der gesamten Materialzusammensetzung, also Feinkornanteil und Grobkornanteil.

Anstatt der Verwendung vorsynthetisierten Grobkornanteils mit der angegebenen Zusammensetzung besteht auch die Möglichkeit, einen anderen Grobkornanteil auf Aluminiumoxidbasis mit derselben oder einer anderen Zusammensetzung als der des Feinkornanteils zu verwenden. Beispielsweise besteht die Möglichkeit, vorgefertigte Hohlkugelstrukturen auf Aluminiumoxidbasis mit einer der Zusammensetzung des Feinkornanteils entsprechenden oder einer anderen Zusammensetzung als Grobkornanteil zu verwenden. Auch die Verwendung eines Gemisches aus vorsynthetisiertem Grobkornanteil und beispielsweise Hohlkugelstrukturen ist im Rahmen der erfindungsgemäßen Materialzusammensetzung möglich.

Als geformtes oder ungeformtes Erzeugnis kann der neu entwickelte Keramikwerkstoff erfindungsgemäß in der Metallurgie, in der Automobilindustrie, in der Glas- und Zementindustrie sowie in der chemischen Industrie eingesetzt werden. Beispielsweise ist in der Metallurgie der Einsatz des Keramikwerkstoffs erfindungsgemäß als Tauchausguss, Auslaufdüse oder Schieberplatte möglich, oder als Auskleidungsmaterial in einer Pfanne oder in einem Verteiler. Weiterhin kann der Keramikwerkstoff erfindungsgemäß als poröser Filterkörper in der Heißgasfiltration eingesetzt werden.

Nachfolgend werden drei konkrete Beispiele für eine erfindungsgemäße Materialzusammensetzung mit dem oben beschriebenen Feinkornanteil beschrieben:

### 1. Materialzusammensetzung mit vorgesintertem Grobkornanteil (Brechgranulat)

Im vorliegenden konkreten Beispiel findet als Grobkornanteil ein vorsynthetisierter Grobkornanteil Verwendung dessen Materialkomponenten in Art und Gewichtsanteilen denen des Feinkornanteils entsprechen. Die Materialzusammensetzung (in Gewichtsanteilen) weist folgende Zusammensetzung auf:
- Feinkornanteil:: 20 % mit Korngrößen zwischen 0,8 µm und 3 µm;
- Grobkornanteil:: 40 % mit Korngrößen zwischen 0,2 mm und 5 mm;
13 % mit Korngrößen zwischen 0,5 mm und 1 mm;
14 % mit Korngrößen zwischen 1 mm und 2 mm;
12 % mit Korngrößen zwischen 2 mm und 3 mm;
- Verflüssiger:: 1 %.

Nach der Zugabe eines Dispergiermittels im Rahmen eines Herstellungsprozesses für einen Feuerfestformkörper weist der resultierende Schlicker einen Wassergehalt von 4 bis 8 % (bezogen auf das Gesamtgewicht der ursprünglichen Materialzusammensetzung) auf.

### 2. Materialzusammensetzung mit Hohlkugelkorund als Grobkornanteil

Im zweiten Beispiel findet Hohlkugelkorund, also Hohlkugelstrukturen aus Aluminiumoxid, statt einem vorsynthetisierten Grobkornanteil Verwendung. Die Materialzusammensetzung weist folgende Zusammensetzung (in Gewichtsanteilen) auf:
- Feinkornanteil:: 39 % mit Korngrößen zwischen 0,8 µm und 3 µm;
- Hohlkugelkorund:: 30 % mit Korngrößen bis 0,5 mm;
15 % mit Korngrößen von 0,5 mm bis 1 mm;
15 % mit Korngrößen von 1 mm bis 2 mm;
- Verflüssiger:: 1 %.

Nach der Zugabe eines Dispergiermittels im Rahmen eines Herstellungsprozesses für einen Feuerfestformkörper weist der resultierende Schlicker einen Wassergehalt von 4 bis 10 % bezogen auf das Gesamtgewicht der ursprünglichen Materialzusammensetzung auf.

### 3. Materialzusammensetzung mit vorsynthetisiertem Grobkornanteil und Tabulartonerde

Im vorliegenden Ausführungsbeispiel weist die Materialzusammensetzung neben dem Feinkornanteil und vorsynthetisiertem Grobkornanteil Tabulartonerde als weiteren Grobkornanteil auf. Die Zusammensetzung (in Gewichtsanteilen) ist wie folgt:
- Feinkornanteil:: 20 % mit Korngrößen von 0,8 µm bis 3 µm;
- Vorsynthetisierter Grobkornanteil:: 5 % mit Korngrößen von 0,2 mm bis 0,5 mm;
10 % mit Korngrößen von 0,5 mm bis 1 mm;
14 % mit Korngrößen von 1 mm bis 2 mm;
12 % mit Korngrößen von 2 mm bis 3 mm;
- Tabulartonerde:: 34 % mit Korngrößen von 0,2 mm bis 0,6 mm;
5 % mit Korngrößen von 0,5 mm bis 1 mm;
- Verflüssiger:: 1 %.

Nach Zugabe eines Dispergiermittels im Rahmen eines Herstellungsprozesses für einen Feuerfestformkörper weist dieser einen Wasseranteil von 4 bis 8 % bezogen auf die ursprüngliche Materialzusammensetzung aus Feinkornanteil und Grobkornanteil (einschließlich vorsynthetisiertem Grobkornanteil und Tabulartonerde) auf.

Eine alternative Zusammensetzung einer Materialzusammensetzung basierend auf Feinkornanteil, vorsynthetisiertem Grobkornanteil und Tabulartonerde ist nachfolgend wiedergegeben (Angaben in Gewichtsanteilen):
- Feinkornanteil:: 30 % mit Korngrößen von 8 µm bis 3 mm;
- Vorsynthetisierter Grobkornanteil:: 5 % mit Korngrößen von 0,2 mm bis 0,5 mm;
10 % mit Korngrößen von 0,5 bis 1 mm;
10 % mit Korngrößen von 1 mm bis 2 mm;
10 % mit Korngrößen von 2 mm bis 3 mm;
- Tabulartonerde:: 10 % mit Korngrößen von 0,2 bis 0,6 mm;
24 % mit Korngrößen von 0,5 bis 1 mm;
- Verflüssiger:: 1 %.

Auch diese Zusammensetzung weist nach der Herstellung eines Schlickers durch Zugabe eines Dispergiermittels im Rahmen eines Herstellungsprozesses für einen Feuerfestformkörper einen Wassergehalt im Bereich von 4 bis 8 % bezogen auf den Feinkornanteil und den Grobkornanteil (einschließlich des vorsynthetisierten Grobkornanteil und der Tabulartonerde) auf.

Es sei angemerkt, dass die Materialzusammensetzungen in allen konkreten Beispielen keinen Verflüssiger zu enthalten brauchen. Dieser kann dann im Rahmen eines Herstellungsverfahrens für Feuerfestformkörper zugegeben werden. Wenn eine Materialzusammensetzung jedoch bereits Verflüssiger enthält, hat dieser einen Gewichtsanteil im Bereich von 0,1 % bis 1 % bezogen auf die Gesamtmasse der jeweiligen Materialzusammensetzung.

Die Materialzusammensetzung gemäß der Erfindung kann wie gemäß einem erfindungsgemäßen Verfahren folgt zu einem Feuerfestformkörper verarbeitet werden:
Zu Beginn des in Fig. 2 dargestellten Verfahrens wird der Feinkornanteil aufbereitet, indem ihm ein Dispergiermittel, beispielsweise Wasser, zugegeben wird (Schritt 11). Anschließend wird dem aufbereiteten Feinkornanteil der Grobkornanteil zugeben (Schritt 13). Darüber hinaus kann in diesem Verfahrensschritt Verflüssiger zugegeben werden, sofern die verwendete Materialzusammensetzung noch keinen enthält. Auch die Zugabe weiterer Hilfsstoffe auf organischer/anorganischer Basis ist möglich. Ergebnis ist ein Schlicker oder eine bildsame Masse oder ein Granulat, welches einem Formgebungsverfahren zugeführt werden kann.

Als Formgebungsverfahren (Schritt 15) kommen insbesondere Gießverfahren, Extrusionsverfahren oder Pressverfahren in Betracht, die das Herstellen eines Formkörpers ermöglichen. Vorzugsweise dient Schlickergussformgebung mit oder ohne Druck- oder Unterdruckbeaufschlagung in porösen Formen, etwa auf Gipsbasis, als geeignetes bindemittelfreies Formgebungsverfahren sowohl zur effizienten Mischung von Fein- und Grobkornanteil, als auch für die Herstellung von Komplexen, dünn- oder dickwandigen Geometrien.

Der Formkörper wird anschließend bei Temperaturen oberhalb 1.550°C (Schritt 17) gesintert. Bei der Sinterung oder während der Anwendung des Keramikwerkstoffes wird beim Korn des Feinkornanteils der Stabilisator des Zirkondioxids (im vorliegenden Ausführungsbeispiel also das Magnesiumoxid) entzogen. Als Ergebnis entstehen mit dem Matrixwerkstoff Spinellphasen und/oder Magnesiumtitanat. Weiterhin können Zirkontitanatphasen und/oder Aliminiumtitanatphasen gebildet werden. Die Destabilisierung des Zirkondioxids und die Bildung der neuen Phasen führen in Summe zur Entstehung von unterkritischen Rissen in der Keramikmatrix, die die Thermoschockbeständigkeit erheblich verbessern.

Das beschriebene Verfahren kann insbesondere dazu Verwendung finden, Hitzeschildelemente herzustellen, wie sie mit Bezug auf Fig. 1 beschrieben worden sind.

Die Erfindung stellt einen korrosionsbeständigen Aluminiumoxidwerkstoff zur Verfügung, der sowohl die eingangs genannten Schwierigkeiten feinkörniger Pulver bezüglich der Herstellung großvolumiger Voll- oder Hohlbauteile entschärft, als auch die chemischen Nachteile, die durch die Zugabe von Zement- oder Phosphat- oder Aluminiumhydroxid-Bindemitteln entstehen, vermeidet.

## Patentansprüche

1. Materialzusammensetzung zur Herstellung eines Feuerfestwerkstoffes mit einem Feinkornanteil mit Korngrößen unter 100 µm und einen Grobkornanteil mit Korngrößen über 100 µm, wobei der Feinkornanteil umfasst:
- Aluminiumoxid mit einem Gewichtsanteil von mindestens 90 % bezogen auf das Gesamtgewicht des Feinkornanteils und mit einer Korngröße von 50 nm bis 100 µm,
- Zirkonoxid mit einem Gewichtsanteil bis 5% bezogen auf das Gesamtgewicht des Feinkornanteils und mit einer Korngröße zwischen 50 nm und 20 µm,
- einen Stabilisator für das Zirkonoxid sowie
- Titanoxidpulver mit einem Gewichtsanteil bis 5 % bezogen auf das Gesamtgewicht des Feinkornanteils und mit einer Korngröße zwischen 50 nm und 20 µm,
und wobei der Grobkornanteil einen Gewichtsanteil von mehr als 30 % der Materialzusammensetzung ausmacht und Brechgranulat auf Aluminiumoxidbasis und/oder Hohlkugelstrukturen auf Aluminiumoxidbasis umfasst.

2. Materialzusammensetzung nach Anspruch 1, bei der das Zirkonoxid mit dem Stabilisator teil- oder vollstablisiert ist.

3. Materialzusammensetzung nach Anspruch 1, bei der das Zirkonoxid monoklines Zirkonoxid ist und der Stabilisator als eigenständiger Bestandteil des Feinkornanteils vorliegt.

4. Materialzusammensetzung nach einem der Ansprüche 1 bis 3, bei dem als Stabilisator Magnesiumoxid und/oder Yttriumoxid und/oder Ceroxid und/oder Kalziumoxid vorhanden ist.

5. Materialzusammensetzung nach einem der Ansprüche 1 bis 4, bei der der Grobkornanteil einen Gewichtsanteil von 60 % bis 80 % der Materialzusammensetzung ausmacht.

6. Materialzusammensetzung nach einem der Ansprüche 1 bis 5, bei der der Grobkornanteil dieselbe Zusammensetzung wie der Feinkornanteil besitzt.

7. Materialzusammensetzung nach Anspruch 6, bei der als Brechgranulat ein aus einer Schmelze erstarrtes und heruntergebrochenes oder ein gesintertes und heruntergebrochenes Brechgranulat auf der Basis des Feinkornanteils vorhanden ist, wobei das gesinterte Brechgranuulat bei Temperaturen oberhalb 1300 Grad Celsius gesintert worden ist.

8. Materialzusammensetzung nach einem der Ansprüche 1 bis 7, die ein Dispergiermedium und/oder einen Verflüssiger umfasst.

9. Verfahren zum Herstellen eines Feuerfestformkörpers (1) unter Verwendung einer Materialzusammensetzung nach einem der vorangehenden Ansprüche, in dem
- der Materialzusammensetzung ein Dispergiermittel und/oder Verflüssiger zugegeben wird, sofern sie noch kein Dispergiermittel und/oder Verflüssiger enthält,
- die Materialzusammensetzung zu einem Formkörper geformt wird,
- der Formkörper bei einer Temperatur oberhalb 1.300 Grad Celsius gesintert wird.

10. Verfahren nach Anspruch 9, bei dem das Zugeben des Dispergiermittels und/oder des Verflüssigers zu der Materialzusammensetzung erfolgt, indem zuerst ein Gemisch aus Dispergiermittel und/oder Verflüssiger und dem Feinkornanteil aufbereitet wird und dem Gemisch anschließend der Grobkornanteil zugegeben wird.

11. Verfahren nach Anspruch 9 oder Anspruch 10, bei dem wenigstens ein Teil des Grobkornanteils zuvor aus Feinkornanteil hergestellt worden ist, indem der Feinkornanteil gesintert oder aus einer Schmelze erstarren gelassen and anschließend runtergebrochen wurde.

12. Verfahren nach einem der Ansprüche 9 bis 11, in dem die Materialzusammensetzung mit dem Dispergiermittel zum Formen des Formkörpers in eine poröse Form gegeben wird.

13. Verfahren nach einem der Ansprüche 9 bis 12, bei dem der Materialzusammensetzung vor dem Formen neben dem Dispergiermittel wenigstens ein weiterer Hilfsstoff auf anorganischer oder organische Basis beigemischt wird.

14. Feuerfestformkörper (1), der aus einer Materialzusammensetzung nach einem der Ansprüche 1 bis 8 hergestellt ist.

15. Feuerfestformkörper nach Anspruch 14, welcher als eines der folgenden Elemente ausgebildet ist: Hitzeschildelement (1), Tauchausguss, Schieberplatte, Auslaufdüse für die Metallurgie.

16. Verwendung eines Materials nach einem der Ansprüche 1 bis 8 als feuerfestes Auskleidungsmaterial.
